# EUROPEAN PATENT SPECIFICATION

(11) **EP 3 070 510 B1**
(45) Date of publication and mention of the grant of the patent: **12.12.2018**
(21) Application number: 15862139.1
(22) Date of filing: 13.10.2015
(51) Int. Cl.: G02B 27/01, B60K 35/00, G02B 5/02

(54) **HEAD-UP DISPLAY, ILLUMINATING DEVICE AND VEHICLE EQUIPPED WITH THE SAME**
HEAD-UP DISPLAY, BELEUCHTUNGSVORRICHTUNG UND FAHRZEUG MIT SELBIGEM AUSGESTATTET
AFFICHAGE TÊTE-HAUTE, DISPOSITIF D'ÉCLAIRAGE ET VÉHICULE ÉQUIPÉ CELUI-CI

(30) Priority: 08.12.2014 JP 2014247614
(43) Date of publication of application: 21.09.2016
(73) Proprietor: Panasonic Intellectual Property Management Co., Ltd., Osaka-shi, Osaka 540-6207 (JP)
(72) Inventor: ASAI, Yosuke, Osaka 540-6207 (JP)
(74) Representative: Grünecker Patent- und Rechtsanwälte PartG mbB
(86) International application number: PCT/JP2015/005163
(87) International publication number: WO 2016/092724

(56) References cited:
- EP-A1- 2 690 484
- WO-A1-2014/188645
- DE-A1-102009 011 908
- JP-A- 2007 087 792
- JP-A- 2009 169 399
- JP-A- 2009 169 399
- JP-A- 2011 085 700
- US-A1- 2012 099 032
- US-A1- 2012 243 104
- US-A1- 2014 268 358

## Description

### TECHNICAL FIELD

The present invention relates to a head-up display which allows a viewer positioned within an eyebox to visually recognize a virtual image.

### BACKGROUND ART

Conventionally, a head-up display has been proposed in which light emitted from a back light of a liquid crystal panel is made uniform and is then transmitted through the liquid crystal panel to illuminate the panel (see Japanese Patent Unexamined Publication No. 2007-108429, for example). The head-up display is equipped with a light source, a first condensing lens, a diffusing plate, and a second condensing lens. This configuration allows a reduced unevenness in luminance of the illumination light, with a decrease in luminance of the light being suppressed when it passes through the display.

The present disclosure provides a head-up display which features only a small difference in luminance between the central and corner portions of a virtual image being displayed on the display.

Document WO 2014/188645 A1 describes an optical conversion element but also describes an illuminating device using the conversion element, in particular for a head-up display. The illuminating device may comprise a plurality of light sources and a corresponding plurality of convex lenses. Further, for a group of convex lenses, a concave lens is provided.

Document US 2014/268358 A1 describes a virtual image display device, in particular for a head-up display.

Document EP 2 690 484 A1 describes a head-up display device having an illuminating device, wherein in the path of light from a light source, there are a condenser lens, an array of convex lenses, a field lens of the convex type, and a light diffusion member.

Document US 2012/0099032 A1 describes a head-up display for a vehicle. The head-up display uses diodes as light sources. In the path of light starting from the diodes, there are a plurality of lenses, a diffusion plate, a liquid crystal display element and a concave lens.

Document DE 10 2009 011 908 A1 describes a head-up display for a vehicle, wherein a particular arrangement of reflecting surfaces is used in order to achieve a homogeneous light distribution.

Document JP 2009 169399 A describes a head-up display having a similar arrangement as that of EP 2 690 484 A1. In a particular embodiment, instead of the array of convex lenses, there is an array of concave lenses.

### SUMMARY OF THE INVENTION

This is achieved by the features of the independent claims.

The head-up display according to the present disclosure is capable of reducing a difference in luminance between the central and peripheral portions of a virtual image being displayed on the display.

### BRIEF DESCRIPTION OF DRAWINGS

FIG. 1 is a schematic view of a vehicle equipped with a head-up display according to a first embodiment.
FIG. 2A is a schematic view of a part of optical paths of the head-up display according to the first embodiment.
FIG. 2B is a schematic view of a part of the optical paths of the head-up display according to the first embodiment.
FIG. 3 is a schematic view illustrating a display unit of the head-up display according to the first embodiment.
FIG. 4 is a schematic view illustrating a configuration of an illuminating device according to the first embodiment.
FIG. 5 is a schematic view illustrating the configuration of the illuminating device according to the first embodiment.
FIG. 6A is a graph showing a distribution of light in the display unit according to the first embodiment.
FIG. 6B is a graph showing a distribution of light in the display unit according to the first embodiment.
FIG. 7 is a schematic view illustrating a configuration of an illuminating device according to a second embodiment.

### DESCRIPTION OF EMBODIMENTS

Hereinafter, detailed descriptions of embodiments will be made with reference to the accompanying drawings as deemed appropriate. However, descriptions in more detail than necessary will sometimes be omitted. For example, detailed descriptions of well-known items and duplicate descriptions of substantially the same configuration will sometimes be omitted, for the sake of brevity and easy understanding by those skilled in the art.

Note that the accompanying drawings and the following descriptions are presented to facilitate full understanding of the present disclosure by those skilled in the art and, therefore, are not intended to impose any limitations on the subject matter described in the claims.

Moreover, an XYZ rectangular coordinate system is defined in each of the drawings to be referred to. That is, an X-axis and Y-axis are respectively defined along two sides of either an upper or a lower surface of a liquid crystal panel, while a Z-axis is defined in the direction of the normal line of the emitting surface of the panel. Furthermore, the X-axis direction is referred to as a first direction, while the Y-axis direction orthogonal to the X-axis direction is referred to as a second direction.

### FIRST EXEMPLARY EMBODIMENT

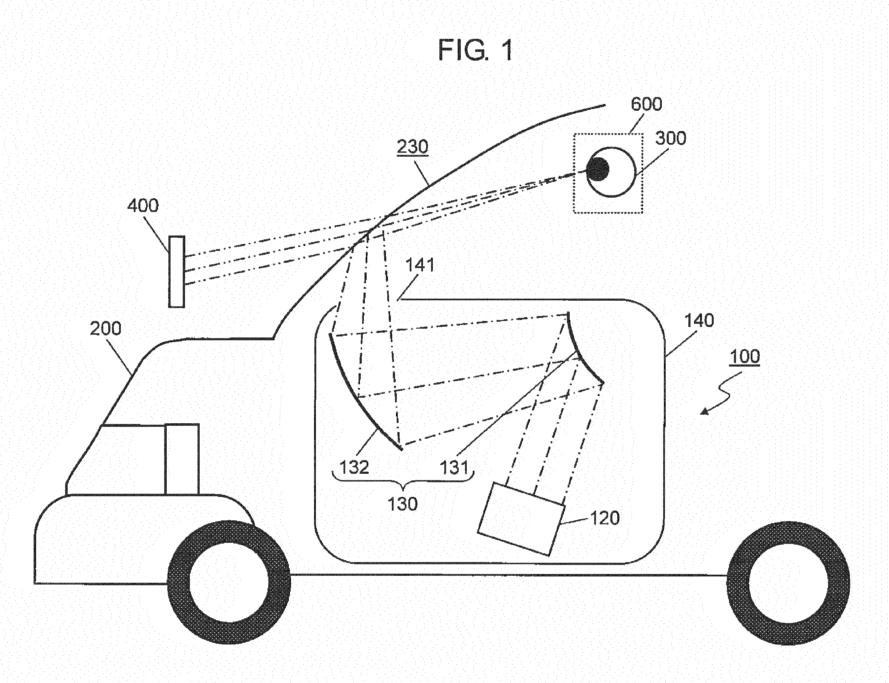

Hereinafter, a first embodiment will be described with reference to FIGS. 1 to 5.

### 1-1. Configuration

### 1-1-1. General Configuration

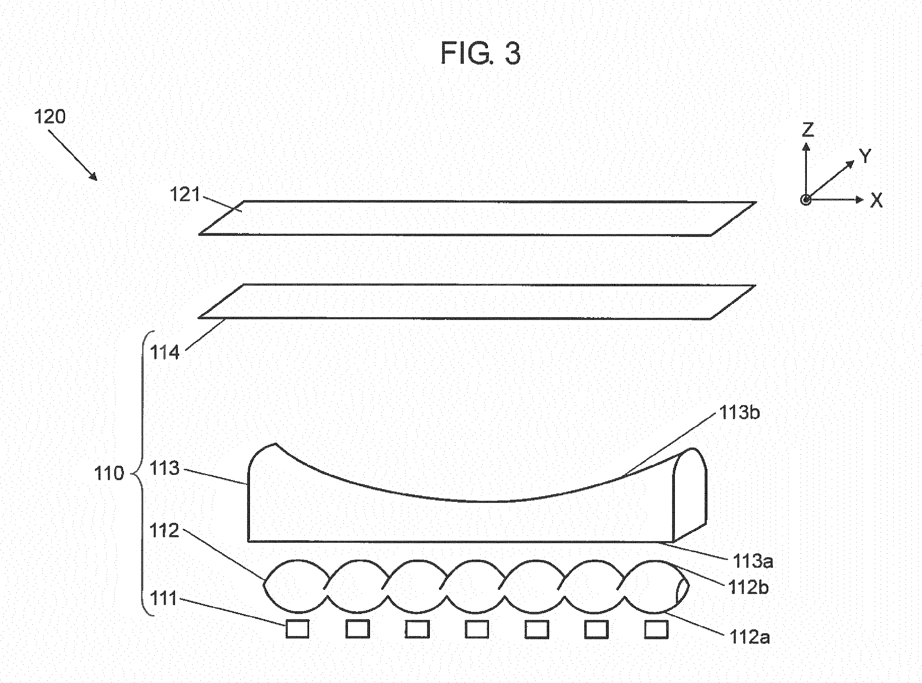

FIG. 1 is a schematic view of a general configuration of vehicle 200 which is equipped with head-up display 100 according to the first embodiment. Head-up display 100 according to the present disclosure is mounted in vehicle 200 that is equipped with windshield 230. Head-up display 100 is configured with display unit 120, optical reflection unit 130, and housing 140. Display unit 120 is configured with illuminating device 110 and liquid crystal panel 121, as shown in FIG. 3.

In head-up display 100, illuminating device 110 illuminates liquid crystal panel 121 (see FIG. 3), thereby generating transmitted light which is then guided, through both optical reflection unit 130 and windshield 230, to the inside of eyebox 600 of viewer 300. This allows viewer 300 to visually recognize virtual image 400. The eyebox, as referred to herein, is a region in which the viewer can visually recognize the virtual image without any lack of the image.

Optical reflection unit 130 is configured with first mirror 131 and second mirror 132. First mirror 131 reflects light, which has been emitted from liquid crystal panel 121, toward second mirror 132. Second mirror 132 reflects the light from first mirror 131 toward windshield 230. The reflecting face of second mirror 132 has a concave shape. Optical reflection unit 130 may not be configured with two mirrors, but with one mirror, or three or more mirrors. Moreover, optical reflection unit 130 may adopt a dioptric system such as a lens.

Housing 140 has opening 141. Opening 141 may be equipped with a transparent cover.

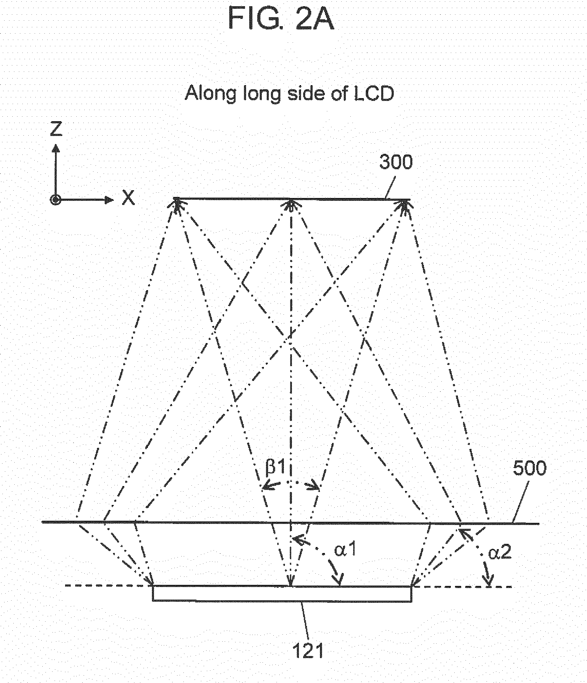

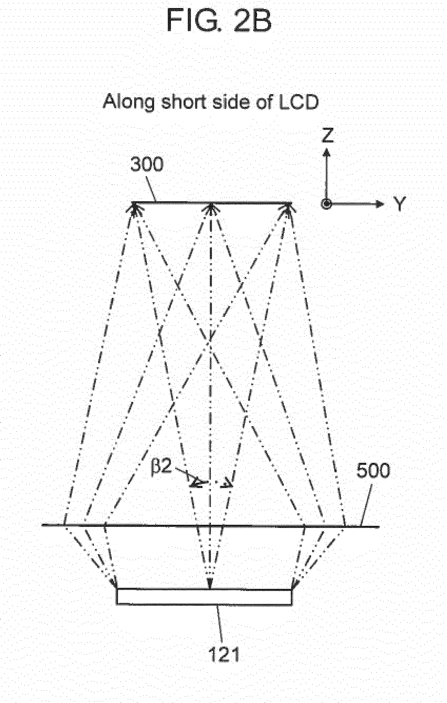

FIGS. 2A and 2B are schematic views of rays of light of head-up display 100, with the rays being visually recognized by viewer 300. FIG. 2A is the schematic view of the rays of light as viewed in the plane defined by the X-axis and the Z-axis; FIG. 2B is the schematic view of the rays of light as viewed in the plane defined by the Y-axis and the Z-axis. Viewer 300 visually recognizes the transmitted light from liquid crystal panel 121, via virtual-image optical system 500. Virtual-image optical system 500 is a combination of optical reflection unit 130 and windshield 230, both shown in FIG. 1.

In the case where liquid crystal panel 121 is disposed parallel to illuminating device 110 (see FIG. 3), the emission light which outgoes from liquid crystal panel 121 and travels toward the center of eyebox 600, has different outgoing angles (α1>α2) at different portions, i.e. the center portion and the end portions of the panel. That is, if the angle of 90° relative to the surface of liquid crystal panel 121 is set as a reference, the emission light outgoing from the center portion of liquid crystal panel 121 makes no angle relative to the reference. On the other hand, the emission light outgoing from the end portions makes outward angles relative to that from outgoing the center portion. This is not true, however, in cases where liquid crystal panel 121 is disposed not parallel to illuminating device 110, so that the light outgoing from the center is inclined.

Moreover, eyebox 600 is commonly larger in the X-axis direction than in the Y-axis direction; therefore, light distribution angle β1 in the X-axis direction is larger than light distribution angle β2 in the Y-axis direction.

### 1-1-2. Configuration of Illuminating Device

FIG. 3 is an exploded perspective view illustrating a configuration of display unit 120. Display unit 120 includes illuminating device 110 and liquid crystal panel 121.

As shown in FIG. 3, illuminating device 110 includes a plurality of light sources 111, a plurality of first lenses 112 which is disposed corresponding respectively to the plurality of light sources 111, second lens 113 which is disposed in the emitting direction of first lenses 112, and diffusing plate 114 which is a diffusing member disposed in the emitting direction of second lens 113. Liquid crystal panel 121 is a transmission-type display device which is disposed in the emitting direction of illuminating device 110.

Each of light sources 111, e.g. a chip-type light-emitting diode (LED), is a light-emitting body to supply the illumination light to liquid crystal panel 121. In the embodiment, the plurality of light sources 111 is disposed in a line in the direction of a long side (the X-axis direction in FIG. 3) when viewed from the direction of a short side (the Y-axis direction in FIG. 3). Here, the orientation of arrangement of light sources 111 is designated as a first direction.

First lenses 112 each have a function of receiving light via first incidence plane 112a, with the light having been emitted from corresponding one of light sources 111, and a function of deflecting the thus-received light to emit it as a substantially parallel light. Moreover, first lenses 112 are disposed in an array in one-to-one correspondence with the plurality of light sources 111. Note that, both first incidence plane 112a and first emitting plane 112b of each of first lenses 112 shown in FIG. 3 have a convex shape; however, it is only required for at least one of first incidence plane 112a and first emitting plane 112b to have a convex shape. Note that each of the convex shapes of first incidence plane 112a and first emitting plane 112b of first lens 112 is not necessarily a rotationally symmetric one about the optical axis, but may be a toroidal one which has a different curvature in each of the directions of the long and short sides. First incidence plane 112a according to the embodiment has a convex shape only in the X-axis direction, i.e. the first direction. In other words, first incidence plane 112a has a cylindrical shape. On the other hand, first emitting plane 112b has not only a convex shape when viewed from both the X-axis direction and the Y-axis direction, but also a so-called toroidal shape which has different curvatures in the different directions: the X-axis direction i.e. the first direction and the Y-axis direction i.e. the second direction. Note that, in the embodiment, the curvature of first emitting plane 112b is smaller in the Y-axis direction than in the X-axis direction.

In the embodiment, the center of light sources 111 and the center of corresponding first lenses 112 are identical to each other; however, it is not always necessary for these centers to be identical.

Second lens 113 has a function of deflecting the emission light from first lenses 112 toward a desired direction. That is, the emission light from each of the plurality of first lenses 112 is deflected by second lens 113 such that the light enters a corresponding region of diffusing plate 114.

Second incidence plane 113a of second lens 113 has a planar shape. Second emitting plane 113b of second lens 113 has a concave shape in the X-axis direction. In the embodiment, second lens 113 has a so-called toroidal shape which is concave in the X-axis direction, i.e. the first direction, and is convex in the Y-axis direction, i.e. the second direction. It is only required for second lens 113 to deflect the emission light from first lenses 112, thereby allowing the light to enter the corresponding region of diffusing plate 114. Therefore, at least one of second incidence plane 113a and second emitting plane 113b is only required to have a concave shape in the X-axis direction.

First lenses 112 and second lens 113 are configured with a transparent material having a predetermined refractive index. The refractive index of the transparent material is about 1.4 to about 1.6, for example. The transparent material may be a resin such as an epoxy resin, a silicon resin, an acryl resin, or a polycarbonate. In the embodiment, a polycarbonate is used in view of heat resistance properties.

Diffusing plate 114 is disposed on the emitting plane side of second lens 113 and on the incidence plane side of liquid crystal panel 121. Moreover, diffusing plate 114 diffuses the light, which has come from second lens 113 and entered every region of diffusing plate 114, and emits the light toward liquid crystal panel 121. This configuration causes the light from the plurality of light sources 111 to be equivalent to light from a surface light source, thereby reducing unevenness in luminance at the inside of eyebox 600. It is only required for diffusing plate 114 to be an optical sheet having a function of diffusing the light. For example, the diffusing plate may be configured with a surface having a bead member or a fine asperity structure, or with a rough surface. Moreover, the diffusing plate may also be a dotted sheet, a translucent milk-white sheet, or the like.

### 1-1-3. Detailed Description of Configuration

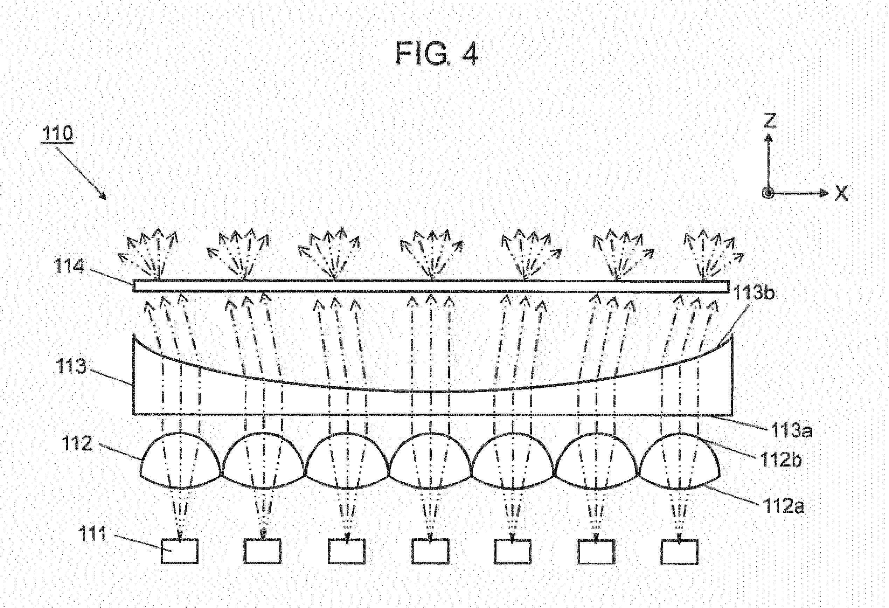

FIG. 4 is a schematic view of illuminating device 110 according to the first embodiment, showing a cross-section in the X-axis direction. First lenses 112 each including both first incidence planes 112a and first emitting planes 112b, deflect the emission light from the plurality of light sources 111 to form a substantially parallel light. Second lens 113 having both second incidence plane 113a and second emitting plane 113b, deflects the emission light from the plurality of the first lenses toward directions that inclines at predetermined angles. Diffusing plate 114 serving as the diffusing member is capable of extending the emission light from second lens 113 to the extent to which the extended light can cover eyebox 600.

In the embodiment, first lenses 112 are such that the plurality of the lenses is disposed in an array in the X-axis direction. However, it is only required for first lenses 112 to be disposed to correspond to light sources 111; therefore, the first lenses may be disposed such that the lenses are either separated at intervals from each other or in contact with each other. Moreover, the plurality of first lenses 112 may be integrally formed as a single body.

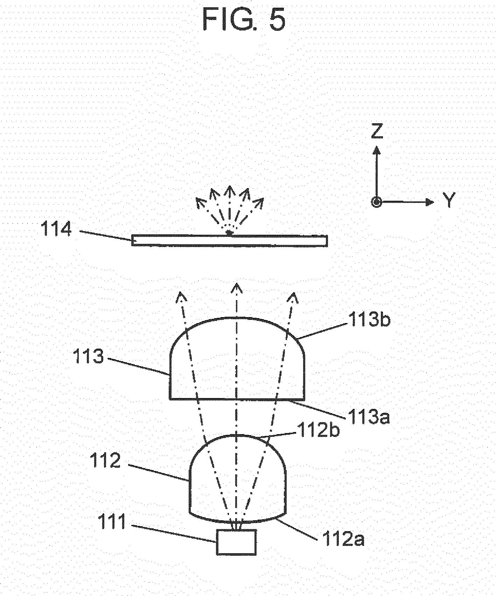

FIG. 5 is a schematic view of illuminating device 110 according to the embodiment, showing a cross-section in the Y-axis direction.

The emission light from light sources 111 is received by first lenses 112 including first incidence planes 112a and first emitting planes 112b, and is then deflected by second lens 113 including second incidence plane 113a and second emitting plane 113b to the extent to which the light becomes outward-extending rays. Diffusing plate 114 extends the light to the extent to which the light can correspond to the width of eyebox 600, thereby allowing the desired characteristics of light distribution.

Note that, in the case where the length of eyebox 600 in the up-and-down direction is different from that in the right-and-left direction, the required angle of light distribution in the direction of the long side is different from that in the direction of the short side. In such a case, diffusing plate 114 is preferably a member that offers different diffusivity (diffusion angle) in each of the X-axis direction i.e. the first direction and the Y-axis direction i.e. the second direction. Such a member is an anisotropic one. In diffusing plate 114 according to the embodiment, the diffusivity in the Y-axis direction is restricted compared to that in the X-axis direction, which corresponds respectively to the directions of the shorter and longer sides of eyebox 600.

### 1-3. Advantages and Others

As described above, in the embodiment, head-up display 100 includes illuminating device 110, liquid crystal panel 121, optical reflection unit 130, and housing 140. Illuminating device 110 includes the plurality of light sources 111 disposed in the first direction (X-axis direction in FIGS. 3 and 4), and the plurality of first lenses 112 disposed in the emitting direction of the plurality of light sources 111. The plurality of the first lenses corresponds respectively to the plurality of light sources 111. Each of the plurality of the first lenses includes first incidence plane 112a and first emitting plane 112b. At least one of first incidence plane 112a and first emitting plane 112b has a convex shape. In addition, illuminating device 110 includes second lens 113 disposed in the emitting direction of first lenses 112, and diffusing plate 114 disposed in the emitting direction of second lens 113. The second lens includes second incidence plane 113a and second emitting plane 113b. In the first direction, the cross-section of at least one of second incidence plane 113a and second emitting plane 113b has a concave shape.

The plurality of first lenses 112 is disposed corresponding respectively to the plurality of light sources 111; at least one of first incidence plane 112a and first emitting plane 112b has the convex shape. Accordingly, the light emitted from first lenses 112 is condensed. Second lens 113 includes second incidence plane 113a and second emitting plane 113b; the cross-section of at least one of second incidence plane 113a and second emitting plane 113b has the concave shape in the first direction. Accordingly, the light emitted from second lens 113 is deflected such that the light has a larger outward emitting angle at a closer position to an end portion of the lens. The light emitted from second lens 113 is extended over the whole region of eyebox 600 via diffusing plate 114 serving as the diffusing member, liquid crystal panel 121, and virtual-image optical system 500. Therefore, at any position within eyebox 600, it is possible to visually recognize virtual image 400 with reduced unevenness in luminance.

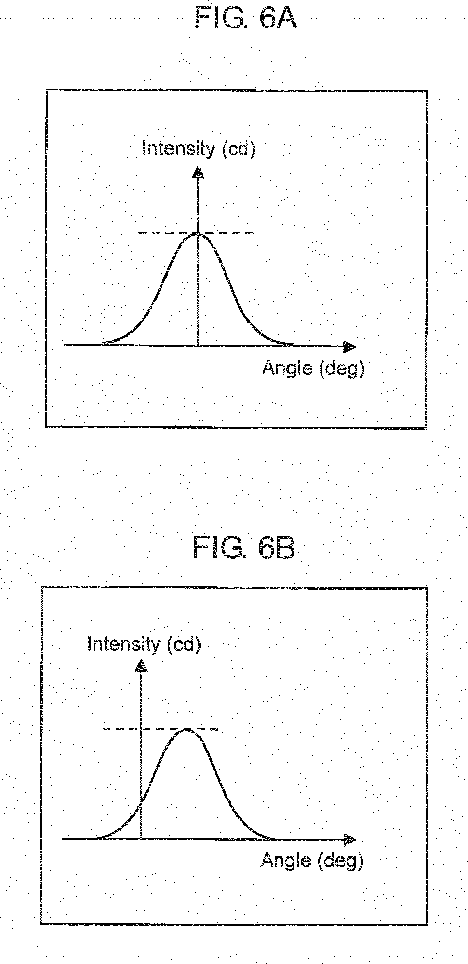

Here, FIGS. 6A and 6B are graphs showing the characteristics of light distribution, in the X-axis direction, of the emission light from liquid crystal panel 121 according to the embodiment. FIG. 6A is the graph of the characteristics of light distribution at the center portion of liquid crystal panel 121. Moreover, FIG. 6B is the graph of the characteristics of light distribution at an end portion of liquid crystal panel 121. As shown in FIG. 6B, in the embodiment, the intensity of the emission light from the end portion of liquid crystal panel 121 exhibits a peak in a direction in which the light goes away from the center of the panel. This configuration allows a reduction in the difference in luminance between the center and the periphery of virtual image 400 in head-up display 100 in which virtual image 400 is visually recognized, with the virtual image being extended to a size larger than the display area of liquid crystal panel 121.

### SECOND EXEMPLARY EMBODIMENT

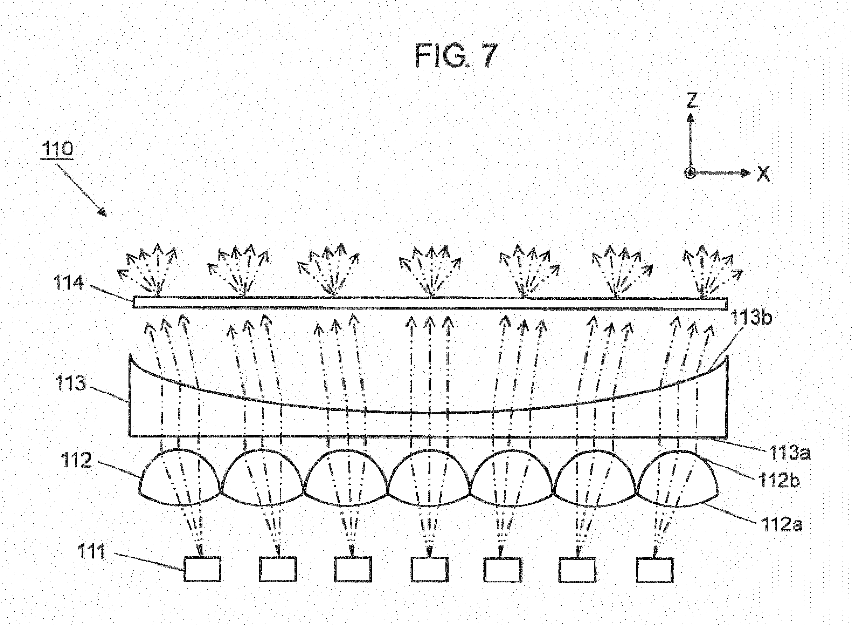

Hereinafter, a second embodiment will be described with reference to FIG. 7.

Since head-up display 100 according to the second embodiment has the same basic configuration as that according to the first embodiment, descriptions to be made below will focus on their differences.

### 2-1. Configuration

FIG. 7 is a schematic view of illuminating device 110 of head-up display 100 according to the second embodiment, showing a cross-section in the X-axis direction.

In the first embodiment, light sources 111 are disposed such that the center line of each of the light sources is located at the apex of corresponding one of first lenses 112. On the other hand, in the second embodiment, light sources 111 are disposed such that the center line of each of the light sources is located out of position in the X-axis direction from the apex of corresponding one of first lenses 112.

In the second embodiment, light sources 111 are disposed at smaller pitches of arrangement than the pitches of arrangement of the apexes of first lenses 112. That is, the arrangement position of each of light sources 111 is more greatly out of position toward the center with respect to the corresponding one of first lenses 112, at a greater distance away from the center in the X-axis direction. In this configuration, each of light sources 111 is preferably shifted out of position to the extent to which, regarding the emission light from the light source concerned, the amount of the light incident on the corresponding one of first lenses 112 is not smaller than the amount of the light incident on an adjacent one of the first lenses.

### 2-2. Advantages and Others

As described above, light sources 111 and first lenses 112 are disposed with their respective centers being out of position from each other, which causes the principal ray of the light emitted from each of first lenses 112 to make a larger outward angle at a larger distance from their center to an end portion of them. This configuration can reduce the refracting power of the concave surface of second lens 113, allowing a smaller curvature of the concave surface. Such a smaller curvature results in a reduction in thickness of the second lens. In addition, this makes it possible to reduce costs of formation and materials of second lens 113.

### OTHER EXEMPLARY EMBODIMENTS

As described above, the first and second embodiments have been described to exemplify the technology disclosed in the present application. However, the technology is not limited to these embodiments, and is also applicable to embodiments that are subjected, as appropriate, to various changes and modifications, replacements, additions, omissions, and the like. Moreover, the technology disclosed herein also allows another embodiment which is configured by combining the appropriate constituent elements in the first and second embodiments described above.

Thus, other embodiments will be exemplified hereinafter.

In the first and second embodiments, it is only required for liquid crystal panel 121 to be a transmission-type display device which serves as a video display apparatus.

Moreover, the descriptions have been made using the example where the liquid crystal panel is disposed orthogonal to the principal ray of the light source; however, the panel may be disposed and inclined relative to the ray.

A Fresnel shape, which is a discontinuous surface structure, may be used in first incidence planes 112a and first emitting planes 112b of first lenses 112, and second incidence plane 113a and second emitting plane 113b of second lens 113. Such a Fresnel shape allows a reduction in size of display unit 120. In this case, the Fresnel shape may be such that it has different curvatures in different directions, that is, the X-axis direction and the Y-axis direction. Alternatively, the Fresnel shape may be formed only in one axial direction.

Although first lenses 112 have been exemplified by convex lenses, total internal reflection (TIR) lenses may be used for them. This configuration allows the light from light sources 111 to be efficiently emitted toward second lens 113, resulting in improved light utilization efficiency.

Illuminating device 110 may be such that a plurality of rows of light sources 111 and a plurality of rows of first lenses 112 are disposed when viewed from the Y-axis direction, i.e. the direction of the short sides. In this case, the emitting plane of second lens 113 is formed in a concave shape in the Y-axis direction, in the same manner as that in the X-axis direction, i.e. the direction of the long sides. This configuration allows a reduction in the difference in luminance between the center and the periphery of virtual image 400 in head-up display 100 in which virtual image 400 is visually recognized, with the virtual image being extended to a size larger than liquid crystal panel 121.

Although the member for reflecting the emission light from head-up display 100 has been exemplified by windshield 230, the reflecting member is not limited to this. A combiner may also be used as the reflecting member.

The light sources have been exemplified by LEDs; however, laser diodes, organic light-emitting diodes, or the like may also be used instead of them.

### INDUSTRIAL APPLICABILITY

The technology according to the present disclosure is applicable to projectors with which virtual images are visually recognized. Specifically, the technology is applicable to head-up displays and the like.

### REFERENCE MARKS IN THE DRAWINGS

- 100: head-up display
- 110: illuminating device
- 111: light source
- 112: first lens
- 112a: first incidence plane
- 112b: first emitting plane
- 113: second lens
- 113a: second incidence plane
- 113b: second emitting plane
- 114: diffusing plate (diffusing member)
- 120: display unit
- 121: liquid crystal panel
- 130: optical reflection unit
- 131: first mirror
- 132: second mirror
- 140: housing
- 141: opening
- 200: vehicle
- 230: windshield
- 300: viewer
- 400: virtual image
- 500: virtual-image optical system
- 600: eyebox

## Claims

1. A display unit for use in a head-up display (100) including an optical reflection unit (130) to reflect light from a light source, the display unit comprising:
a plurality of light sources (111) arranged in a first direction;
a plurality of first lenses (112) disposed corresponding to the plurality of light sources (111) in an emitting direction of the plurality of light sources (111), each of the plurality of first lenses (112) having a first incidence surface (112a) and a first emitting surface (112b), at least one of the first incidence surface (112a) and the first emitting surface (112b) being convex;
a second lens (113) disposed in an emitting direction of the plurality of first lenses (112), the second lens (113) having a second incidence surface (113a) and a second emitting surface (113b), at least one of the second incidence surface (113a) and the second emitting surface (113b) having a concave cross-section in the first direction, wherein each of the plurality of first lenses (112) being configured so as to condense the light received from the corresponding one of the plurality of light sources (111) onto the second lens (113); and
a transmission type display device (121) disposed in an emitting direction of the diffusing member (114) that emits the light from the diffusing member,
**characterized by**
a diffusing member (114) disposed in an emitting direction of the second lens, and in that
the surface with the concave cross-section in the first direction of the second lens has only a single recess, such that the second lens (113) transmits and refracts light emitted from plural convex first lenses (112) on said single recess of the surface with the concave cross-section, and
the configuration is such that the light emitted from the second lens (113) has an outward emitting angle in the first direction which is monotonically increasing from the center of the second lens (113) towards an end portion of the second lens (113) along the first direction.

2. The display unit according to claim 1, wherein the first emitting surface (112b) has a different curvature in each of the first direction and a second direction orthogonal to the first direction.

3. The display unit according to claim 1, wherein one of the second incidence surface (113a) and the second emitting surface (113b) has a convex shape in a second direction orthogonal to the first direction.

4. The display unit according to claim 2, wherein one of the second incidence surface (113a) and the second emitting surface (113b) has a convex shape in the second direction.

5. The display unit according to any one of claims 1 to 4, wherein the first incidence surface (112a) has a convex shape in the first direction.

6. The display unit according to any one of claims 1 to 4, wherein the diffusing member (114) has a different diffusion angle in each of the first direction and a second direction orthogonal to the first direction.

7. A head-up display, comprising:
a display unit (110) according to any of claims 1 to 6; and
an optical reflection unit (130) for reflecting light from the illuminating device.

8. The head-up display according to claim 7, wherein the head-up display is disposed in a vehicle including a windshield.

9. A vehicle comprising the head-up display according to claim 7 or 8.

## Patentansprüche

1. Anzeigeeinheit zur Benutzung in einem Head-up-Display (100), enthaltend eine optische Reflexionseinheit (130), um Licht von einer Lichtquelle zu reflektieren, wobei die Anzeigeeinheit umfasst:
eine Mehrzahl von in einer ersten Richtung angeordneten Lichtquellen (111);
eine Mehrzahl erster Linsen (112), angeordnet entsprechend zu der Mehrzahl von Lichtquellen (111) in einer Emissionsrichtung der Mehrzahl von Lichtquellen (111), wobei jede der Mehrzahl der ersten Linsen (112) eine erste Einfallsoberfläche (112a) und eine erste Emissionsoberfläche (112b) haben, wobei wenigstens die erste Einfallsoberfläche (112a) oder die erste Emissionsoberfläche (112b) konvex sind;
eine zweite Linse (113), angeordnet in einer Emissionsrichtung der Mehrzahl erster Linsen (112), wobei die zweite Linse (113) eine zweite Einfallsoberfläche (113a) und eine zweite Emissionsoberfläche (113b) hat, wobei wenigstens die zweite Einfallsoberfläche (113a) oder die zweite Emissionsoberfläche (113b) einen konkaven Querschnitt in der ersten Richtung hat, wobei jede der Mehrzahl erster Linsen (112) so eingerichtet ist, dass sie das von der entsprechenden der Mehrzahl von Lichtquellen (111) empfangene Licht auf die zweite Linse (113) bündelt (original: condense); und
eine Anzeigeeinrichtung (121) vom Transmissionstyp, angeordnet in einer Emissionsrichtung des Diffusionsglieds (114), die das Licht von dem Diffusionsglied emittiert,
**gekennzeichnet durch**
ein Diffusionsglied (114), angeordnet in einer Emissionsrichtung der zweiten Linse, und **dadurch, dass**
die Oberfläche mit dem konkaven Querschnitt in der ersten Richtung der zweiten Linse nur eine einzige Vertiefung hat, so dass die zweite Linse (113) von mehreren konvexen ersten Linsen (112) emittiertes Licht an diese einzige Vertiefung der Oberfläche mit dem konkaven Querschnitt überträgt und bricht, und
die Konfiguration so ist, dass das von der zweiten Linse (113) emittierte Licht einen nach außen gerichteten Emissionswinkel in der ersten Richtung hat, der von der Mitte der zweiten Linse (113) zu einem Endbereich der zweiten Linse (113) entlang der ersten Richtung monoton wächst.

2. Anzeigeeinheit nach Anspruch 1, wobei die erste Emissionsoberfläche (112b) in der ersten Richtung und einer zweiten Richtung, orthogonal zu der ersten Richtung, jeweils eine unterschiedliche Krümmung hat.

3. Anzeigeeinheit nach Anspruch 1, wobei die zweite Einfallsoberfläche (113a) oder die zweite Emissionsoberfläche (113b) in einer zweiten Richtung, orthogonal zu der ersten Richtung, eine konvexe Form hat.

4. Anzeigeeinheit nach Anspruch 2, wobei die zweite Einfallsoberfläche (113a) oder die zweite Emissionsoberfläche (113b) in der zweiten Richtung eine konvexe Form hat.

5. Anzeigeeinheit nach einem der Ansprüche 1 bis 4, wobei die erste Einfallsoberfläche (112a) eine konvexe Form in der ersten Richtung hat.

6. Anzeigeeinheit nach einem der Ansprüche 1 bis 4, wobei das Diffusionsglied (114) in der ersten Richtung und einer zweiten Richtung, orthogonal zu der ersten Richtung, jeweils einen unterschiedlichen Diffusionswinkel hat.

7. Head-up-Display, umfassend:
eine Anzeigeeinheit (110) nach einem der Ansprüche 1 bis 6; und
eine optische Reflexionseinheit (130) zum Reflektieren von Licht von der Beleuchtungseinrichtung.

8. Head-up-Display nach Anspruch 7, wobei das Head-up-Display in einem Fahrzeug mit einer Windschutzscheibe angeordnet ist.

9. Fahrzeug, umfassend das Head-up-Display nach Anspruch 7 oder 8.

## Revendications

1. Unité d'affichage destinée à une utilisation dans un afficheur tête haute (100) incluant une unité de réflexion optique (130) destinée à réfléchir la lumière provenant d'une source de lumière, l'unité d'affichage comprenant :
une pluralité de sources de lumière (111) agencées dans une première direction,
une pluralité de premières lentilles (112) disposées de façon correspondante à la pluralité de sources de lumière (111) dans la direction d'émission de la pluralité de sources de lumière (111), chacune de la pluralité de premières lentilles (112) comportant une première surface d'incidence (112a) et une première surface d'émission (112b), au moins l'une d'entre la première surface d'incidence (112a) et la première surface d'émission (112b) étant convexe,
une seconde lentille (113) disposée dans la direction d'émission de la pluralité de premières lentilles (112), la seconde lentille (113) comportant une seconde surface d'incidence (113a) et une seconde surface d'émission (113b), au moins l'une entre la seconde surface d'incidence (113a) et la seconde surface d'émission (113b) présentant une section transversale concave dans la première direction, chacune de la pluralité de premières lentilles (112) étant configurée de sorte à condenser la lumière reçue en provenance de celle correspondante de la pluralité de sources de lumière (111) sur la seconde lentille (113), et
un dispositif d'affichage de type transmission (121) disposé dans la direction d'émission de l'élément de diffusion (114) qui émet la lumière provenant de l'élément de diffusion,
**caractérisée par**
un élément de diffusion (114) disposé dans la direction d'émission de la seconde lentille, et **caractérisée en ce que**
la surface présentant la section transversale dans la première direction de la seconde lentille ne comporte qu'un seul évidement de sorte que la seconde lentille (113) transmet et réfracte de la lumière émise par plusieurs premières lentilles convexes (112) sur ledit évidement unique de la surface présentant la section transversale concave, et
la configuration est telle que la lumière émise par la seconde lentille (113) présente un angle d'émission vers l'extérieur dans la première direction qui augmente de façon monotone depuis le centre de la seconde lentille (113) vers l'extrémité de la seconde lentille (113) le long de la première direction.

2. Unité d'affichage selon la revendication 1, dans laquelle la première surface d'émission (112b) présente un rayon de courbure différent dans chacune de la première direction et d'une seconde direction orthogonale à la première direction.

3. Unité d'affichage selon la revendication 1, dans laquelle l'une de la seconde surface d'incidence (113a) et de la seconde surface d'émission (113b) présente une forme convexe dans une seconde direction orthogonale à la première direction.

4. Unité d'affichage selon la revendication 2, dans laquelle l'une de la seconde surface d'incidence (113a) et de la seconde surface d'émission (113b) présente une forme convexe dans la seconde direction.

5. Unité d'affichage selon l'une quelconque des revendications 1 à 4, dans laquelle la première surface d'incidence (112a) présente une forme convexe dans la première direction.

6. Unité d'affichage selon l'une quelconque des revendications 1 à 4, dans laquelle l'élément de diffusion (114) présente un angle de diffusion différent dans chacune de la première direction et d'une seconde direction orthogonale à la première direction.

7. Afficheur tête haute comprenant :
une unité d'affichage (110) conforme à l'une quelconque des revendications 1 à 6, et
une unité de réflexion optique (130) destinée à réfléchir la lumière provenant du dispositif d'illumination.

8. Afficheur tête haute selon la revendication 7, l'afficheur tête haute étant disposé dans un véhicule incluant un pare-brise.

9. Véhicule comprenant l'afficheur tête haute conforme à la revendication 7 ou à la revendication 8.
